(19) Europäisches Patentamt
European Patent Office
Office européen des brevets

(11) **EP 4 312 177 A1**

(12) **EUROPEAN PATENT APPLICATION**

(43) Date of publication:
**31.01.2024 Bulletin 2024/05**

(51) International Patent Classification (IPC):
***G06Q 40/08*** *(2012.01)*

(21) Application number: **23187837.2**

(22) Date of filing: **26.07.2023**

(52) Cooperative Patent Classification (CPC):
**G06Q 40/08**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **26.07.2022 US 202217873341**

(71) Applicant: **Cambridge Mobile Telematics Inc.**
**Cambridge, MA 02142 (US)**

(72) Inventor: **MADDEN, Samuel**
**Newton, 02459 (US)**

(74) Representative: **Fish & Richardson P.C.**
**Highlight Business Towers**
**Mies-van-der-Rohe-Straße 8**
**80807 München (DE)**

(54) **VEHICLE IDENTIFICATION NUMBER MODELING FOR TELEMATICS**

(57) A system can include one or more processors and computer storage storing executable computer instructions executable by the one or more processors to receive a first vehicle input comprising telematics data characterizing one or more telematics characteristics of a vehicle; receive a second vehicle input comprising vehicle data characterizing one or more vehicle symbol characteristics of the vehicle; process the first vehicle input and the second vehicle input to generate an embedding; and process the embedding using a prediction model to generate the risk prediction. Risk assessments determined using telematics information can be interpreted or modified based on vehicle-specific information.

FIG. 1

**Description**

**BACKGROUND**

Telematics can refer to the field of sending, receiving, and storing data related to telecommunication devices, global positioning system (GPS) devices, or other such sensors for the purpose of controlling, observing, analyzing, or otherwise interacting with a remote device related to those sensors. In some cases, one or more sensors providing telematics data can be related to a vehicle, such as an automobile. The telematics data provided by the sensors can be used to observe the behavior of the vehicle and the vehicle's driver.

**SUMMARY**

Aspects of the embodiments include a method performed by a data processing system, the method including accessing, from a hardware storage device, one or more telematics data records structured to specify one or more telematics characteristics of a trip taken by a driver of a vehicle, wherein the telematics data records are associated with a key that uniquely identifies the driver of the vehicle; accessing, from the hardware storage device, one or more vehicle symbol data records structured to specify one or more vehicle-specific characteristics for the vehicle; processing, by the data processing system, the one or more telematics data records to identify telematics data specifying the one or more telematics characteristics of the trip; processing, by the data processing system, the one or more vehicle symbol data records to identify vehicle symbol data specifying the one or more vehicle-specific characteristics for the vehicle; generating a risk prediction for the driver based on the one or more telematics characteristics of the trip and the one or more vehicle-specific characteristics; and storing, in the hardware storage device, a risk data record that is structured with data specifying the risk prediction for the driver and that is associated with the key.

Aspects of the embodiments are directed to one or more non-transitory computer-readable storage media for storing instructions, that when executed, cause a hardware processor to perform operations including accessing, from a hardware storage device, one or more telematics data records structured to specify one or more telematics characteristics of a trip taken by a driver of a vehicle, wherein the telematics data records are associated with a key that uniquely identifies the driver of the vehicle; accessing, from the hardware storage device, one or more vehicle symbol data records structured to specify one or more vehicle-specific characteristics for the vehicle; processing, by the data processing system, the one or more telematics data records to identify telematics data specifying the one or more telematics characteristics of the trip; processing, by the data processing system, the one or more vehicle symbol data records to identify vehicle symbol data specifying the one or more vehicle-specific characteristics for the vehicle; generating a risk prediction for the driver based on the one or more telematics characteristics of the trip and the one or more vehicle-specific characteristics; and storing, in the hardware storage device, a risk data record that is structured with data specifying the risk prediction for the driver and that is associated with the key.

A system that includes one or more processors; and a non-transitory computer-readable medium storing instructions which, when executed by the one or more processors, configure the system to access, from a hardware storage device, one or more telematics data records structured to specify one or more telematics characteristics of a trip taken by a driver of a vehicle, wherein the telematics data records are associated with a key that uniquely identifies the driver of the vehicle; access, from the hardware storage device, one or more vehicle symbol data records structured to specify one or more vehicle-specific characteristics for the vehicle; process, by the data processing system, the one or more telematics data records to identify telematics data specifying the one or more telematics characteristics of the trip; process, by the data processing system, the one or more vehicle symbol data records to identify vehicle symbol data specifying the one or more vehicle-specific characteristics for the vehicle; generate a risk prediction for the driver based on the one or more telematics characteristics of the trip and the one or more vehicle-specific characteristics; and store, in the hardware storage device, a risk data record that is structured with data specifying the risk prediction for the driver and that is associated with the key.

In some embodiments, the risk prediction characterizes a frequency loss.

In some embodiments, wherein the risk prediction characterizes a loss cost.

In some embodiments, the prediction model comprises a prediction neural network.

In some embodiments, the vehicle symbol data comprise one or more of a Vehicle Identification Number ("VIN"), model year, vehicle make, vehicle model, vehicle type, engine size, brake size, safety features, and advanced driver assistance systems ("ADAS").

In some embodiments, the one or more telematics characteristics of the vehicle comprise one or more of vehicle location, geographical point of interest, vehicle speed, vehicle incidents, vehicle diagnostics, vehicle status, remote vehicle inspection reports, panic alerts, and images captured from a dashboard camera.

In some embodiments, processing, by the data processing system, the one or more vehicle symbol data records to identify vehicle symbol data specifying the one or more vehicle symbol characteristics of the vehicle comprises processing the parsed vehicle symbol data using a vehicle symbol embedding model to generate a vehicle symbol embedding.

In some embodiments, generating a risk prediction for the driver based on the one or more telematics characteristics of the trip and the one or more vehicle-specific characteristics includes receiving the telematics characteristics of the trip and the vehicle-specific characteristics into a risk assessment engine; determining, using the risk assessment engine, driver risk based, at least in part, on the telematics characteristics of the trip; and assessing the driver risk determined from the telematics characteristics of the trip using the vehicle-specific characteristics.

## BRIEF DESCRIPTION OF THE DRAWINGS

FIG. 1 is a schematic diagram illustrating an example system for verifying mobile telematics information using vehicle information in accordance with embodiments of the present disclosure.

FIG. 2 is a schematic diagram of an example connected vehicle in accordance with embodiments of the present disclosure.

FIG. 3 is a schematic diagram of an example sensor tag in accordance with embodiments of the present disclosure.

FIG. 4 is a schematic diagram of an example mobile device in accordance with embodiments of the present disclosure.

FIG. 5 is a schematic diagram of a server for assessing risk based on vehicle telematics information and vehicle identification number (VIN-) sourced information in accordance with embodiments of the present disclosure..

FIG. 6A is a schematic diagram of another example system for determining risk assessment of a driver using vehicle data in accordance with embodiments of the present disclosure.

FIG. 6B is a schematic diagram of vehicle data handling from vehicle identification number in accordance with embodiments of the present disclosure.

FIG. 7A is a schematic diagram of a system that includes a risk assessment engine that uses vehicle symbol information with telematics information to assess risk in accordance with embodiments of the present disclosure.

FIG. 7B is a schematic diagram of an example training system for training vehicle-specific risk modeling in accordance with embodiments of the present disclosure.

FIG. 8 is a block diagram of an example computer system in accordance with embodiments of the present disclosure.

Like numerals indicate like components.

## DETAILED DESCRIPTION

Vehicle telematics information can be used to assess driver risk. Insurance companies use the make, model and year of a vehicle when assessing premiums;

the vehicle-specific risk likelihoods are called "ISO Symbols" or "vehicle symbols". These take into account both the cost of the vehicle along with observed vehicle risk.

Given the Vehicle Identification Number (VIN) of a vehicle, one can extract a host of interesting features, including year, make, model, presence or absence of ADAS features, engine size and performance, braking size and performance, etc.). Notably, VIN can indicate whether certain optional ADAS features are present or absent.

The VIN information, alone, however is not necessarily sufficient to determine the risk of the vehicle from the perspective of claims and losses. Insurance companies, for example, may like to know how much the presence of a forward collision system, for example, affects the claims frequency or (better still) the loss-cost. For example, a vehicle with an expensive ADAS feature may be simultaneously safer to drive but more expensive to repair. Risk assessment can be reconciled by correlating vehicle information with claims data.

This disclosure describes techniques to create and use vehicle-specific risk assessment to augment overall risk assessment, and in some embodiments, combine vehicle-specific risk assessment with telematics information, to refine risk assessment. For example, driver behavior from telematics information combined with vehicle information tested against claims information can provide a more accurate risk assessment from the perspective of losses.

Vehicle-specific information can also inform telematics information. For example, driver braking behavior alone might not be enough to understand driver behavior. Linking driver braking behavior with information about the vehicle, such as weight, stopping time, brake size, etc., can increase the reliability of telematics information. It would be beneficial to leverage this information to improve risk estimation or to provide useful risk features to insurers.

The claims data can be frequency loss or loss-cost. The claims data can be selected to test the VIN-sourced vehicle symbol models based, at least in part, on the way the VIN-sourced vehicle information is categorized. This disclosure described optimization of vehicle-specific risk modeling based on, among other things, the availability of data, the complexity of computations, and the resulting error. In some embodiments, the algorithms model and predict loss-cost, as this number would be more directly useful to insurers. This also appears to be what is offered by a typical vehicle symbol. However, getting access to VIN-specific claims information for modeling loss-cost can be difficult because of various considerations, including rarity of events, rarity of claims, access to insurer information, granularity of the information, etc. Frequency loss can also be used. Frequency loss can be more readily available information but can come with higher levels of granularity.

Since claims are rare, claims data is typically aggregated across many drivers to provide enough labeled data to train a model. However, as more aspects of the VIN-sourced data are leveraged, these data can be divided into smaller and smaller buckets of vehicles. In principle, if many VIN features are used, each bucket may include a single vehicle. This issue can be viewed as a type of bias/variance tradeoff. If risk is estimated by averaging behavior over a large and diverse set of vehicles, we are introducing a bias in the estimation of any given vehicle. On the other hand, if we estimate risk by averaging behavior over a small set of vehicles, the variance in our estimate will be high.

Driver risk data obtained from analyzing telematics information can be assessed or altered in view of vehicle characteristics and / or vehicle-specific risk assessments. If vehicle-specific risk is combined along with a driver's telematics risk, a single unified lift curve can be compute for an entire population of drivers. A natural candidate for a global optimal solution would be one that maximizes the (decile or quintile) lift.

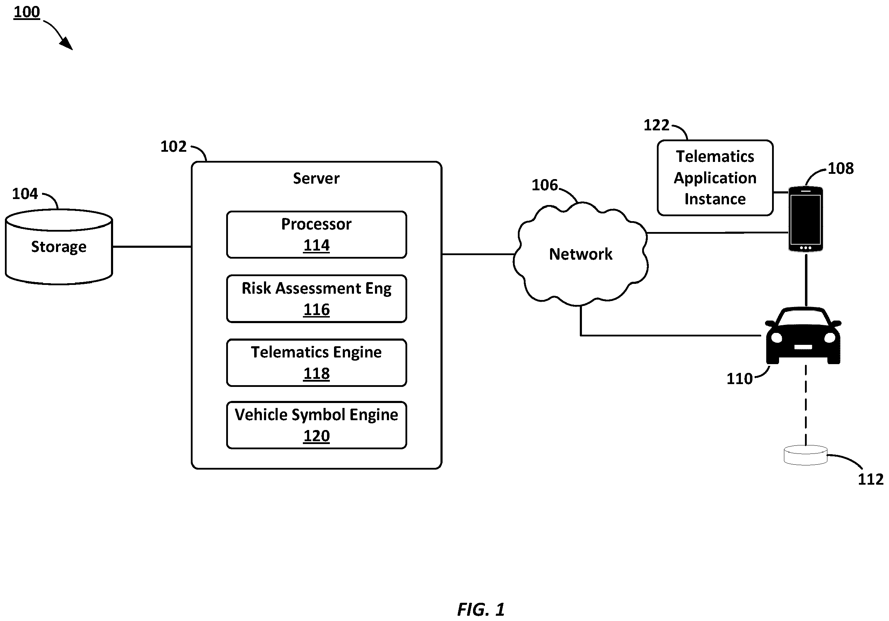

FIG. 1 is a schematic diagram illustrating an example system for verifying mobile telematics information using vehicle information in accordance with embodiments of the present disclosure. The system 100 includes server 102, a storage system 104, a network 106, a mobile device 108, and a connected vehicle 110. The storage system 104 includes one or more computer-readable storage mediums configured to receive and store sensor information and other information for verifying that telematics information uploaded by a mobile device corresponds to a specific vehicle and for performing assessments of driving behavior and risk using those telematics data.

A trip can include, for example, any instance of travel from an origin to a destination. In some cases, a trip is an instance involving a single transportation mode (e.g., a car) or a single role of a person being transported (e.g., a driver) or both. For example, a trip may be an instance of travel from a home to a store in a car. The driver of the car can have a mobile device 108 that includes a telematics application. During a trip, the telematics application can be running as a telematics application instance 122 on mobile device 108.

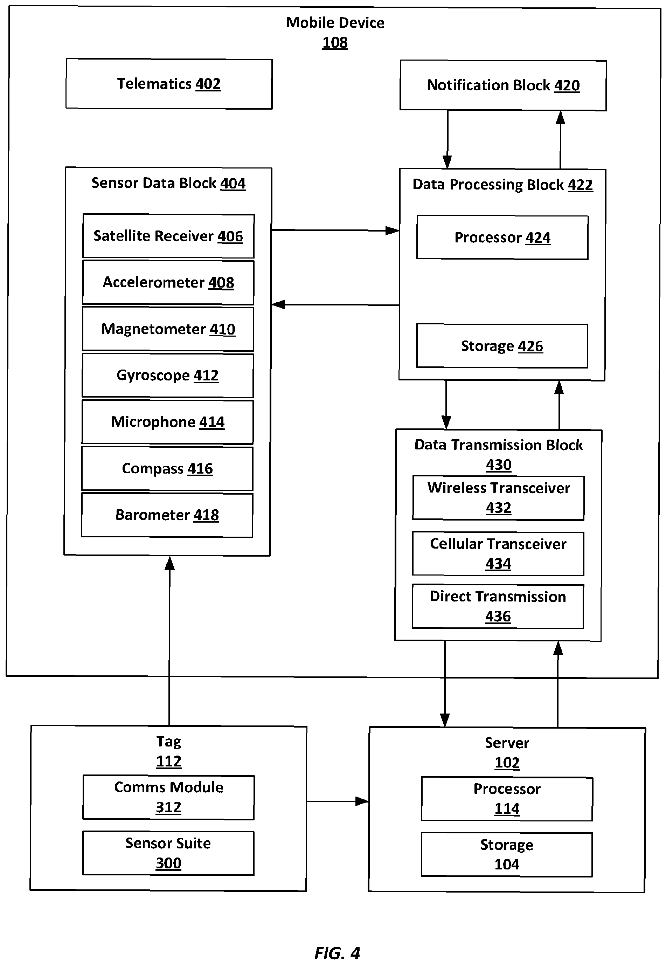

The mobile device 108 can accumulate vehicle telematics information during the trip while telematics application instance 122 is running. The mobile device 108 can communicate the accumulated telematics information to server 102 through network 106 at the end of a trip or at predetermined intervals or milestones. The mobile device 108 can receive vehicle telematics information from a variety of sources, including from sensors associated with the mobile device 108 itself, sensors associated with the vehicle, sensor tags 112, after-market sensors, vehicle diagnostics information, vehicle processor register information, satellite receivers, etc. The mobile device 108 can include a sensor suite, which is described in more detail in FIG. 4.

The server 102 can include one or more hardware processors 114. Server 102 can include risk assessment engine 116. Risk assessment engine 116 can perform risk assessment processing using inputs, such as telematics information and vehicle-specific information. The output of the risk assessment engine 116 can be an assessment of risk for a driver, a vehicle, a specific drive or event, or other information useful for, e.g., an insurance company or actuarial model or underwriter, etc. Risk assessment engine 116 can use machine learning models to process input data to get a risk assessment output.

The server 102 can also include a telematics engine 118. Telematics engine 118 can use as input telematics data obtained from a mobile device during a drive. The telematics engine 118 can use machine learning models and other processing techniques for various purposes, such as scoring the drive, identifying events that occurred during the drive, determining driver behavior and distraction, contribute to overall driver behavior, determine ADAS operation during a drive, etc. The telematics engine 118 can output information to the risk assessment engine 116, which the risk assessment engine 116 can use to provide a quantitative risk assessment.

The server 102 can also include a vehicle-specific risk engine 120. The vehicle-specific risk engine 120 can use an input vehicle identification number sourced (VIN-sourced) information that is specific to the vehicle. The vehicle-specific engine 120 can use machine learning models to correlate vehicle-specific features with loss information, which can be used in combination with telematics information to assess risk. The risk assessment engine 116 can take as input the combination of vehicle-specific risk and telematics data to quantitatively provide a risk assessment about a drive, a driver, a car, etc.

The telematics information and vehicle information can be stored in storage 104. Storage 104 is associated with server 102 or can be distributed or cloud-based storage. The storage 104 can include non-transitory computer-readable media storing instructions that when executed cause the one or more hardware processors 114 to verify that a mobile device was in a connected vehicle during a trip, to determine that the telematics information accumulated by the mobile device during the trip presents driving behavior for the trip.

Generally, telematics information includes information from vehicle GPS systems, onboard vehicle diagnostics, wireless telematics devices (e.g., tags), onboard sensors, mobile device sensors, and black box technologies to record and transmit vehicle data, such as speed, location, maintenance requirements and servicing, and cross-reference this data with the vehicle's internal behavior.

Generally, sensor information (or sensor data) refers broadly to information that is sensed by a sensor. The sensor can be part of the vehicle, such as on-board cameras or LiDAR systems. The sensor can be part of the mobile device, such as a magnetometer or satellite receiver. The sensor can be part of a sensor tag 112 that is attached to the vehicle, which can include a gyroscope or an accelerometer. In some embodiments, an external sensor can be individually attached to the vehicle and communicatively coupled to the mobile device 108, so that information sensed by the external sensor can be sent to the mobile device 108. An example of an external sensor can be an after-market dash-cam. As another example, an external sensor can be part of a device described in U.S. Patent No. 11,074,769, filed May 9, 2019, the contents of which are incorporated by reference in their entirety herein.

Network 106 can include any type of data network that facilitates the communication of information between mobile device 108 and server 102. For example, network 106 can be a cellular network, a Wi-Fi connection to the Internet, or other type of network.

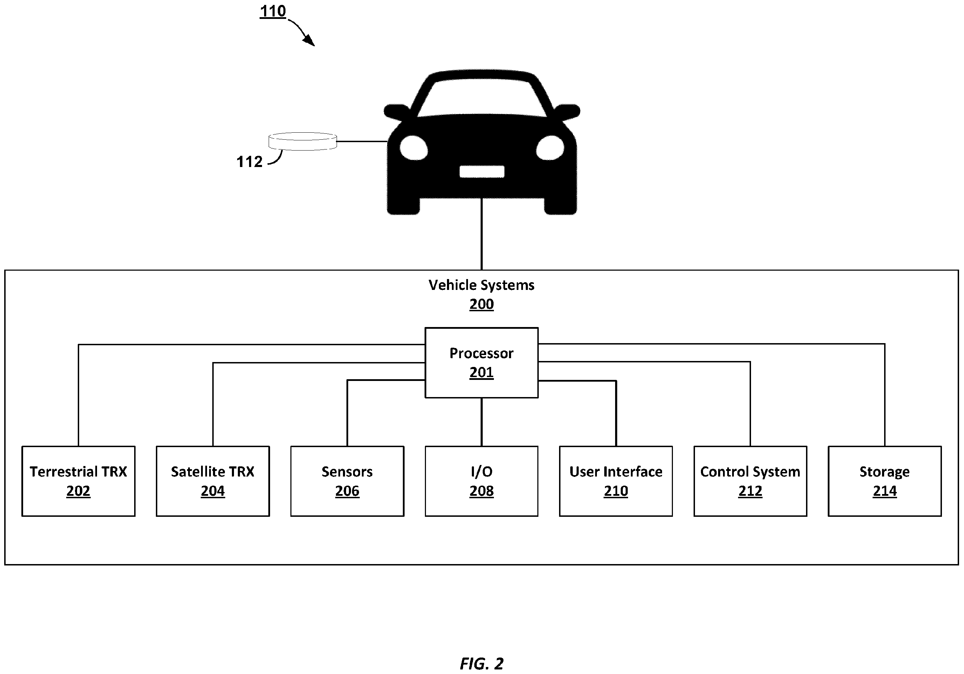

FIG. 2 is a schematic diagram of an example connected vehicle 110 in accordance with embodiments of the present disclosure. Connected vehicle 110 can include vehicle systems 200. Vehicle systems 200 can include various system components that allow the connected vehicle to collect information about the vehicle, the vehicle's location, trajectory, on-board systems, and other information. One or more processors 201 can control various features on the vehicle.

The vehicle systems 200 can include one or more sensors 206. Sensors 206 can include any type of sensor that can collect information about the vehicle, the driver, the trip, the environment, etc. For example, the vehicle 110 can include an accelerometer, a speedometer, an odometer, a pressure sensor, on-board cameras, thermometers, tire-pressure sensors, fluid level and temperature sensors, eye gaze tracking sensors, gyroscopes, and other sensors. Sensors 206 can also include sensors that support advance driver assistance systems (ADAS).

Vehicle systems 200 include input/output (I/O) interface 208. I/O interface 208 can include ports for communications and power, such as Universal Serial Bus (USB) ports. A driver might plug a mobile device into a USB port to play music, use maps and navigation services, send and receive calls and text messages, etc. The I/O interface provides a way for the driver (and others) to interact with the connected vehicle 110, charge devices, establish communications points, etc.

The vehicle systems 200 also includes a user interface, such as a graphical user interface (GUI). The user interface 210 can provide an interface for the driver or passenger to provide information to the connected vehicle 110 or read information from the connected vehicle 110. A driver might plug a mobile device 108 into a USB port and launch a telematics application instance prior to starting a trip. The user interface 210 can display the information from the telematics application instance to the driver.

The vehicle systems 200 includes a control system 212. Control system 212 can manage various operational features of the vehicle, from ignition to power management, engine or motor control, air conditioning, ADAS, etc.

Storage 214 can store various data. Storage 214 can include flash storage, but can also include cache memory, registers, and other types of memory. Storage 214 can store telematics information and other information received from sensors. Storage 214 can also store vehicle identification information, driver information, vehicle status, ownership information, and other information.

In addition, vehicle systems 200 includes communications components for communicating with mobile devices, remote servers, satellites, etc. For example, connected vehicle 110 includes a terrestrial transceiver 202. Terrestrial transceiver 202 can include, but is not limited to, any communication protocol for terrestrial communications, such as Wi-Fi, cellular, Bluetooth, RF, light-based communications, or other type of terrestrial communications. Vehicle system 200 can also include a satellite transceiver 204. Satellite transceiver 204 can be used to support global navigation satellite systems (GNSS), such as global positioning system (GPS) or other satellite-based location systems. In some embodiments, satellite transceiver 204 can be used for communicating information to remote servers through a satellite communications relay.

The connected vehicle 110 can use terrestrial transceiver 202 to communicate telematics information and other information about the trip and/or the connected vehicle 110 to a remote server 102 based on receiving a prompt or query from the remote server 102. In some embodiments, the connected vehicle 110 can send telematics information and other information about the trip and/or the connected vehicle 110 to a remote server based on receiving a prompt or query received from a mobile device 108. In some embodiments, the connected vehicle 110 can send telematics information and other information about the trip and/or the connected vehicle 110 to the mobile device 108 based on receiving a prompt or query from the remote server or from the mobile device 108.

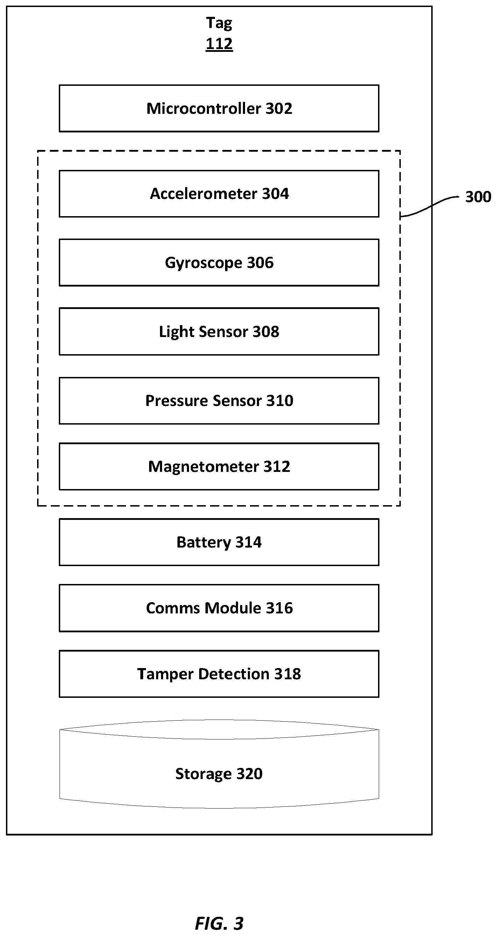

Connected vehicle 110 can include a sensor tag 112. FIG. 3 is a schematic diagram of an example sensor tag 112 in accordance with embodiments of the present disclosure. The tag 112 contains a processor in the form of a microcontroller 302 capable of executing programmed instructions (e.g., software or firmware), which controls the operation of the various other components of the tag. The components include a communications module 316. Communications module 316 can include a low-power wireless communication module to communicate with a mobile device 108 in the vehicle. In some embodiments, the tag 112 can also be connected to the vehicle 110 or mobile device 108 through a wired connection, such as through a USB cable.

It will be appreciated that the mobile device 108 could be any suitable mobile communications device such as a mobile telephone, a tablet, an iPod or any other suitable communications device. In any event, the components of the tag 112 include a sensor suite 300. Sensor suite 300 can include one or more of a three-axis accelerometer 304, and optionally one or more among a three-axis gyroscope 306, a light sensor 308, a pressure sensor 310, and/or a magnetometer 312.

The accelerometer 304 measures the acceleration of the tag 112 and thereby of the connected vehicle 110 when the connected vehicle is on a trip and reports the data to the microcontroller 302. The accelerometer 304 and other sensors of sensor suite 300 provide digital output generally via a serial interface standard or wireless interface standard.

The tag 112 includes a battery 314 for providing power to the device. The battery may be in a coin cell form factor, standard AAA or AA, or solar. In some embodiments, the tag is not tethered to any wired source of power, such as the vehicle's electrical power supply or the vehicle's standard on-board diagnostic (OBD) port or to a mobile device 108. Because it does not have an unbounded source of energy, the tag's operation includes methods to use energy frugally and carefully, as described below.

In an embodiment, the components in the tag 112 are low-power devices, so that one or two small coin-cell batteries suffice for the tag to run for several thousands of hours of driving time (e.g., multiple years of operation). The firmware of the microcontroller 302 on the tag 112 records telematics data mostly only when the vehicle is moving. When the vehicle is not moving, the components of the tag 112 are in powered-down or in an ultra-low-power idle state. An "acceleration state machine" can control the different power states of the tag 112.

The advantages of not requiring a tethered power source are that there is no complicated or cumbersome installation procedure as with an installed black box. Plugging the tag into the vehicle's OBD port is also not desirable given that these types of devices could potentially interfere with the vehicle's on-board systems. The capital and operational costs of a telematics system with the untethered tag are considerably lower than black boxes and OBD devices and are more scalable for insurance telematic companies.

The tag 112 records acceleration and other sensor data. The tag 112 streams that data to the mobile device 108 over the short-range wireless communication link, which will in turn process that data and transmit at least a portion of the received and processed data via a wireless communications network 106 such as 802.11 (WiFi) or cellular network to a server 102 with an associated storage system 104. As mentioned before, in some embodiments, the tag 112 can be connected to mobile device 108 or connected vehicle 110 by a wired connection.

The tag 112 includes data storage 320 in the form of a flash storage, for example using a serial flash memory. The data storage 320 stores data about trip start/end times, acceleration and other sensor data including telematic events detected by the firmware such as hard braking, accelerations, and turns, unexpected movements of the tag, collisions or crashes, and debugging logs together with time stamps. The tag 112 also includes random access memory (RAM) used by the firmware and read-only memory (ROM) used to store configuration data and executable instructions.

In the illustrated example, the communications module 316 can include a short range wireless communications protocol, such as Bluetooth, but any low-power communication could be used. Bluetooth Low Energy (BLE) meets the desired power requirements and is widely available on commodity smartphone devices. In an example embodiment the microcontroller 302 and communications module 316 including antenna and crystal are combined in a single chip. Communications module 316 can also include long range communications capabilities. For example, communications module 316 can include a radio and associated circuitry for sending and receiving information across a cellular network, such as a network compatible with 3GPP communications protocols.

The tag 112 includes a tamper detection mechanism 318. Tamper detection can aid in verification that sensor information from a trip can be correlated to a connected vehicle. The tamper detection mechanism 318 can use one or both of the following two methods. The first method uses the accelerometer and using an orientation algorithm where the tag 112 once secured to the vehicle will have knowledge of its correction angle in relation to the vehicle travelling direction. This algorithm computes the rotation matrix that converts from the axes of the tag's accelerometer to the axes corresponding to the vehicle's frame of reference. Should the tag 112 experience any sudden changes in this orientation the most likely reason is a movement of the affixed tag, which would be considered tampering. This tampering event will be recorded in the tag flash memory and transmitted securely to the backend server. The detection of such tampering reduces potential fraud.

The second method uses a light sensor chip included in the tag 112, which will be covered by the tag housing. When removing the tag from its intended position, the piece of the housing will be broken, and the light sensor will be exposed. This, in turn, will trigger a tamper event, which will be transmitted to the data storage 320 and then sent via the mobile device 108 to the server 102.

Further disclosure regarding sensor tag 112 for obtaining telematics information during trip can be found in U.S. Patent Application Serial No. 14/529,812, filed October 31, 2014, the contents of which are incorporated by reference in their entirety herein.

FIG. 4 is a schematic diagram of an example mobile device 108 in accordance with embodiments of the present disclosure. Mobile device 108 having a number of different components. Mobile device 108 may include a sensor data block 404 (sensor suite 404), a data processing block 422, a data transmission block 430, and optionally a notification block 420. The sensor data block 404 includes data collection sensors as well as data collected from these sensors that are available to mobile device 108. This can include external devices such as tag 112 connected via Bluetooth, USB cable, etc. The data processing block 422 includes storage 426, and manipulations done to the data obtained from the sensor data block 404 by processor 424. This may include, but is not limited to, analyzing, characterizing, subsampling, filtering, reformatting, etc. Data transmission block 430 may include any transmission of the data off the mobile device 108 to an external computing device that can also store and manipulate the data obtained from sensor data block 404. The external computing device can be, for example, a server 102. Server 102 can include a processor 114 and can access storage 104. Notification block 140 may report the results of analysis of sensor data performed by the data processing block 422 to a user of the mobile device 108 via a display (not shown). For example, notification block 420 may display or otherwise report a trip status, a query notification status, a location, a prompt, or other information to a user of the mobile device 108.

Data transmission block 430 can include circuitry and software components to support wireless transmission of data (from, e.g., wireless transceiver 432

Some embodiments are described using examples where driving data is collected using mobile devices 108, and these examples are not limited to any particular mobile device. As examples, a variety of mobile devices including sensors such as location determination systems such as global positioning system (GPS) receivers 406, accelerometers 408, magnetometer 410, gyroscopes 412, microphone 414, compasses 416, barometers 418, communications capabilities, and the like are included within the scope of the disclosure. Exemplary mobile devices include smart watches, fitness monitors, Bluetooth headsets, tablets, laptop computers, smart phones, music players, movement analysis devices, and other suitable devices. One of ordinary skill in the art, given the description herein, would recognize many variations, modifications, and alternatives for the implementation of embodiments.

To collect telematics data associated with the driving behavior of a driver, one or more sensors on mobile device 108 (e.g., the sensors of sensor data block 404) are operated close in time to a period when mobile device 108 is with the driver when operating a vehicle (e.g., during a "drive" or a "trip." With many mobile devices 108, the sensors used to collect data are components of the mobile device 108, and use power resources available to mobile device 108 components, e.g., mobile device battery power and/or a data source external to mobile device 108.

Some embodiments use settings of a mobile device to enable different functions described herein. For example, in Apple iOS, and/or Android OS, having certain settings enabled can enable certain functions of embodiments. For some embodiments, having location services enabled allows the collection of location information from the mobile device (e.g., collected by global positioning system (GPS) sensors, and enabling background app refresh allows some embodiments to execute in the background, collecting and analyzing driving data even when the application is not executing. In some implementations, alerts are provided or surfaced using notification block 420 while the app is running in the background since the trip capture can be performed in the background. These alerts may facilitate driving behavior modification. Further disclosure regarding mobile devices for obtaining telematics information during trip can be found in U.S. Patent No. 11,072,339, filed June 6, 2017, the contents of which are incorporated by reference in their entirety herein.

In embodiments, the mobile device 108 can run a telematics application 402 instance that is started up prior to the start of a trip. When the telematics application 402 instance is launched or when instructed by a user, the mobile device 108 can begin tracking telematics information about the trip, including recording a position and time for the start of the trip. During the trip at certain intervals or milestones or distances, including at the end of the trip, the mobile device 108 can upload telematics information to remote server 102. Telematics information can be accumulated from sensors and other components of the mobile device 108 and/or from sensor tag 112, if present. In some embodiments, the mobile device 108 can be instructed to upload information to the remote server 102 on command.

In some embodiments, the uploading of telematics information by the mobile device 108 causes the server 102 to query the connected vehicle 110 for telematics information and other information. In some embodiments, the server 102 can request the mobile device 108 to query the connected vehicle 110 for the telematics information and other information. The connected vehicle 110 can send the telematics information and other information directly to the server 102 or back to the mobile device 108. If the connected vehicle 110 sends the telematics information and other information to the mobile device 108, the mobile device 108 can package the connected vehicle's telematics information and other information and send to the server 102.

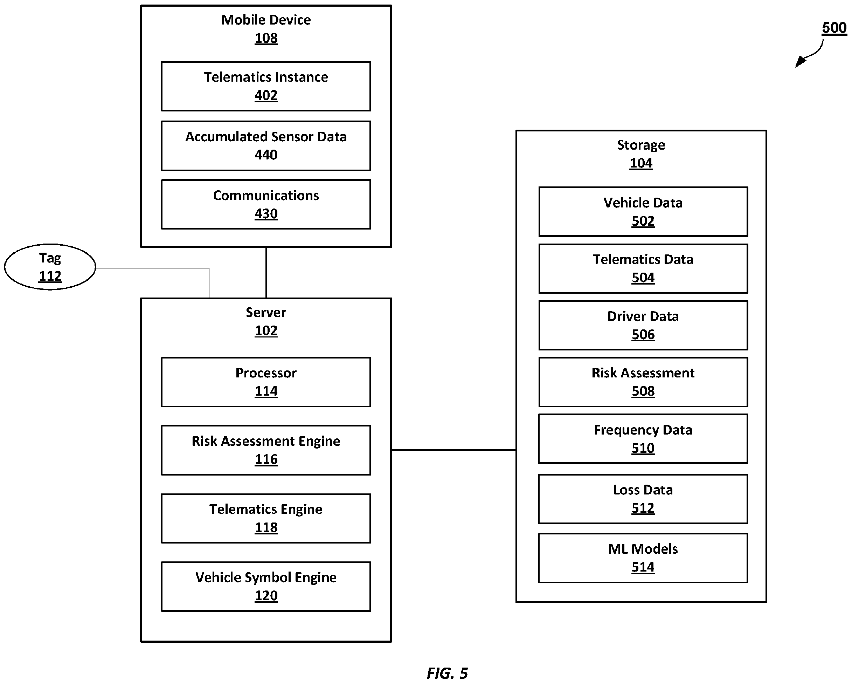

FIG. 5 is a schematic diagram 500 of a server 102 for assessing risk based on vehicle telematics information and vehicle identification number (VIN) sourced information in accordance with embodiments of the present disclosure. In this example, server 102 communicates with mobile device 108. In some embodiments, server 102 may provide functionality using software components including, but not limited a risk assessment engine 116 and a telematics engine 118. These components may include instructions that are executed by one or more hardware processors 114 and kept in non-transitory computer readable media to perform one or more operations. Server 102 may also access data storage 104. Data storage 104 can store vehicle data 502, telematics data 504, driver data 506, risk assessment score 508, frequency loss data 510, loss-cost data 512, and machine learning models 514. Data storage 104 can store telematics information from current or previous trips, driver behavior scores and risk assessments, vehicle information such as vehicle identification information, driver information, and other information. It is important to note that, while not shown, one or more of the components shown operating within server 102 can operate fully or partially within mobile device 108, and vice versa.

Vehicle data 502 can include VIN-sourced information for a specific vehicle. VIN-sourced information can include vehicle year, make, and model. VIN-sourced information can also include ADAS features and other safety features that are part of the vehicle and identified through a VIN look up. VIN-sourced information can also include service records for the vehicle, ownership records, accident records, vehicle damage records, (if available) police incident records, and other recorded information that is or might be pertinent to risk assessment.

The year, make, and model of the vehicle and/or the VIN can provide other vehicle data 502. Vehicle data 502 can also include vehicle performance information, such as top speed, theoretical and observed acceleration metrics (e.g., 0-60 mph times), theoretical and observed braking metrics (e.g., 100-0 mph, 60-0 mph, etc.), cornering capabilities, quantification of vehicle agility, and other performance characteristics. Vehicle information can also include curb weight, weight distribution, wheel base, engine size, horsepower, stock brake size, wheel size, stock tire size and type, crash rating, and other information that can be used in assessing risk.

Telematics data 504 can include data from telematics collection during a drive and can include accumulated telematics data 440 collected over a period of time. To collect data associated with the driving behavior of a driver, one or more sensors on mobile device 108 (e.g., the sensors of sensor data block 404) may be operated close in time to a period when mobile device 108 is with the driver during a drive or trip. Once the mobile device sensors have collected data (and/or in real time), some embodiments analyze the data to determine acceleration vectors for the vehicle, as well as different features of the drive. Telematics data 504 can be used to create driver data 506, which can be a driving score for a specific drive for the driver and/or can be a driver's risk assessment score 508 based on driving history. Driver data 506 can change over time based on the other information collected about the driver and about each drive, so that the driver's score accurately represents a pattern of behavior. Driver data 506 can be associated with a key uniquely identifying the driver. The key can be used to access driver records, including telematics data records and in some embodiments, vehicle symbol data.

As discussed herein, some embodiments can transform collected sensor data (e.g., driving data collected using sensor data block 404) into different results, including, but not limited to, analysis of braking behavior, analysis of acceleration behavior, estimates of the occurrence of times where a driver is speeding ("speeding behavior"), analysis of steering behavior, and estimates of the occurrence of times where a driver was distracted (e.g., "mobile device usage behavior"). Examples of collecting driving data using sensors of a mobile device are described herein. Examples of analyzing collected driving data to detect driving behaviors are also described herein. Although some embodiments are discussed in terms of certain behaviors, the present disclosure is not limited to these particular behaviors and other driving behaviors are included within the scope of the present disclosure. The driving behaviors may be used to assign a driving score to a trip or to a plurality of trips based on driving behaviors. Such driving scores can be used to determine risk assessments for a driver and to otherwise analyze driving behavior. Notifications of driving behavior, such as display of a driving score, can be made via notification block 140 of mobile device 108. The driving score may be used to adjust the frequency of data collected by sensor data block 404 in some embodiments. Further disclosure regarding servers for obtaining telematics information and using telematics information for assessing driving behaviors during trip can be found in U.S. Patent No. 11,072,339, filed June 6, 2017, the contents of which are incorporated by reference in their entirety herein.

The storage 104 can store or access information pertaining to frequency loss data 510 and/or loss-cost data 512. Part of the training of the machine learning models 514 can include using frequency loss data 510 and/or loss-cost data 512 to error correct machine learning outputs. This allows the machine learning algorithms to predict frequency loss and/or loss-cost based, at least in part, on vehicle data. Vehicle-specific risk assessment can predict, for example, frequency loss or loss-cost for specific year/make/model vehicles; and that resulting prediction can inform overall risk assessment 508 for the driver and/or the vehicle. Risk assessment 508 can include hardware and / or software logic to model or predict cost loss or frequency loss.

As mentioned previously, storage 104 can store various machine learning models 514. Machine learning models can be used to output predictions for driving behavior, risk assessment, vehicle data and crash data correlations, vehicle data embedding, and other functions. The machine learning models can use neural networks, decision trees, regression models, etc. The machine learning types can include supervised, unsupervised, and reinforcement learning. As an example, learning embedding can be performed using neural networks for classifying VIN-sourced data.

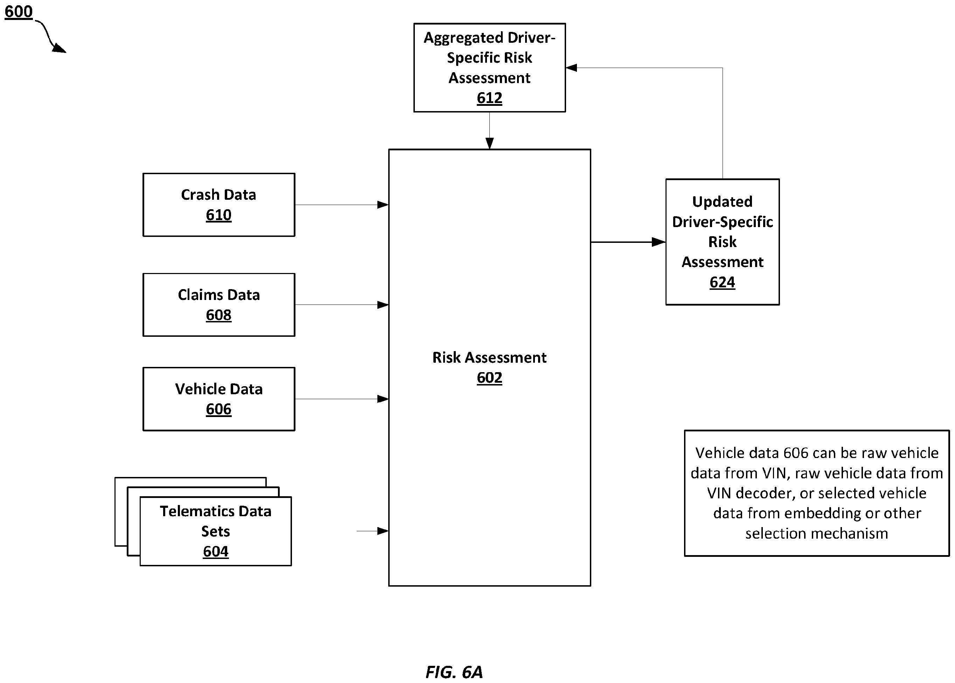

FIG. 6A is a schematic diagram of another example system 600 for determining risk assessment of a driver using vehicle data in accordance with embodiments of the present disclosure. System 600 represents a generalized system for using vehicle data 606, that can include vehicle symbol information, vehicle crash information 612, and vehicle claims data 616, as well as telematics information 606 for a trip by a driver, in the risk assessment for the driver. The system 600 can include a risk assessment engine 602. Risk assessment engine 602 can take as inputs vehicle data 606 and telematics data 604. The risk assessment engine 602 can then process the inputs to derive a risk assessment.

Risk assessment engine 602 can also take as input aggregated driver-specific risk assessments based on prior information and derivations.

In embodiments, risk assessment engine 602 can take as inputs claims data 608 and / or crash data 610. Claims data 608 can be selected based on the year, make, and model of the vehicle, trim level, safety features, class of vehicle, etc. The claims data 608 can be used as part of the risk assessment along with the vehicle data 606. Likewise, crash data 610 can be used as part of the risk assessment.

Risk assessment engine 602 can use telematics information, including telematics risk data for a driver, to output a risk assessment for the driver. The risk assessment engine 602 can also assess the determined risk assessment using vehicle-specific information. Generating a risk prediction for the driver can be based on the one or more telematics characteristics of the trip and the one or more vehicle-specific characteristics. The risk assessment engine can receive the telematics characteristics of the trip and the vehicle-specific characteristics. The risk assessment engine 602 can then determine driver risk based, at least in part, on the telematics characteristics of the trip. The driver risk can be evaluated, interpreted, or altered using the vehicle-specific characteristics. This way, vehicle information is used to refine driver risk determined by the telematics information to accommodate for characteristics of the vehicle being driven.

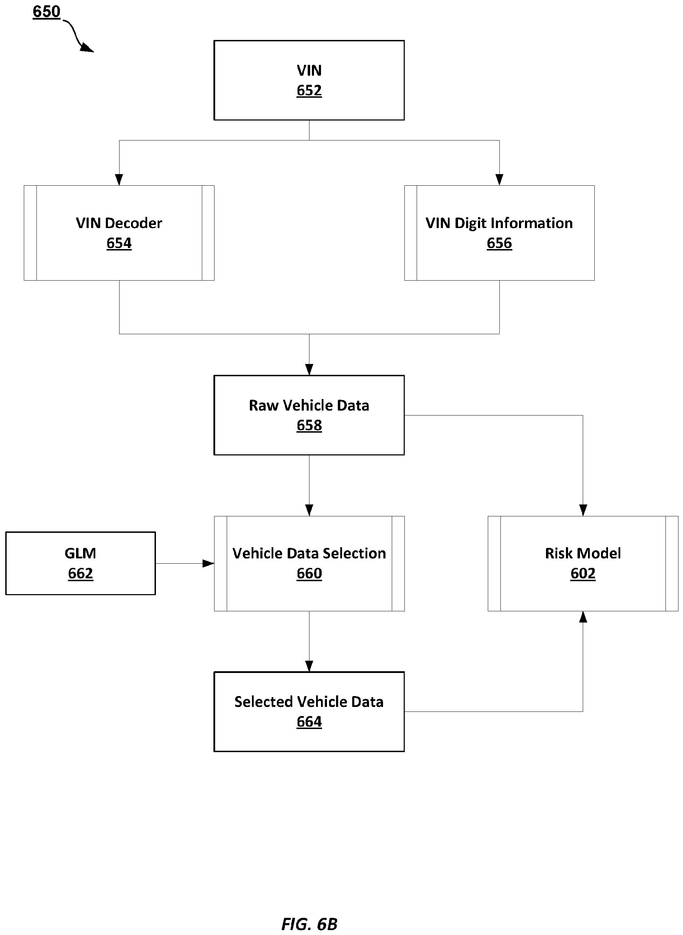

FIG. 6B is a schematic diagram of vehicle data handling from vehicle identification number in accordance with embodiments of the present disclosure. First, a vehicle identification number (VIN) 652 for the vehicle can be identified. Certain information can be immediately determined based on parsing the digits of the VIN. (656). Each digit of a VIN has a meaning, which can reveal certain information about the vehicle, contributing to raw vehicle data 658. In addition, a VIN decoder 654 can decode the VIN, which can result in a readable file, such as a CSV file or spreadsheet or other formatted data. The VIN decoder 654 can also contribute information about the vehicle to raw vehicle data 658. Raw vehicle data can be input into the risk model 602.

Because the raw vehicle data 658 can be over-inclusive of irrelevant information, raw vehicle data 658 can be further analyzed to identify certain vehicle-specific aspects that are relevant to the risk analysis. Raw vehicle data 658 can be received into a vehicle data selection processor 660 that can parse or other process vehicle data 606 into more meaningful information. As an example, the vehicle data selection processor 660 can include a generalized linear model (GLM) 662 or other embedding model to create one or more orders of embedding of the raw vehicle data 658. Such processed vehicle data can be referred to as selected vehicle data 664. Selected vehicle data 664 can be received as input into the risk assessment engine 602. This way, the risk assessment engine 602 only receives as input vehicle data that has an impact on risk assessment, thereby reducing unnecessary computations, increasing efficiency of the risk assessment engine, and maintaining high levels of accuracy.

In embodiments, the vehicle data can be used to create a learned VIN embedding. A VIN embedding can include one or more ML layers of vehicle information classifications. A neural net can be built that can take categorical VIN-sourced data and embed the VIN-sourced data into a lower dimension. Selected VIN-sourced data can be embedded to a single dimension (i.e., to create a "vehicle symbol" for VIN-sourced data). The embedding can be used as one of the inputs to the risk assessment model (along with, e.g., "rate of hard braking" or "mileage"). The embedding and the generalized linear model (GLM) 662 can be optimized jointly, which can be done by representing the GLM 662 itself as a successive layer in the neural net. The learned embedding of VIN-sourced data provides a unified, statistically justifiable approach. As new data is received (or data is identified as relevant), new vehicle symbol categories can be computed automatically. At the outset, sufficient data should be collected to create an embedding that is statistically significant for the risk assessment models.

As an aside, to perform Poisson Regression using a neural net, a single-layer neural net can be made with linear activation functions whose loss function maximizes the log-likelihood of the corresponding Poisson distribution. Other techniques can also be used.

The way the VIN-sourced vehicle data 606 is selected, categorized, or grouped can increase information usefulness for risk assessment. In some embodiments, a vehicle taxonomy can be designed using vehicle data that groups similar vehicles together. For example, vehicles can be grouped (or separated) by make/model/year. Alternately, vehicles can be grouped into functional classes (e.g., one category might be "low horsepower 4-door sedans with forward collision systems"; while another category might be "two-door sports coupes with more than 300 horsepower"). This way of grouping is easy to interpret and defend. For example, such groupings are based on facts about the vehicle. These groupings can, however be guided by intuition about similar models, which can result in biases that exist about vehicle classes. In some cases, the classification are determined by hand, which would be computationally expensive.

Generally, the term "vehicle data" 606 can include raw vehicle data 658 and / or selected vehicle data 664.

Returning to FIG. 6A, the risk assessment engine 602 can also receive vehicle-based crash information 610 and vehicle-based claims information 608 as inputs. The crash information 610 and claims information 608 can be used to model frequency loss or cost loss for a vehicle, for various granularities. For example, depending on the availability of information, frequency loss can be modeled using vehicle data and one or both of crash data and claims data for a vehicle make and model, a vehicle make and model and trim level, a vehicle class, a vehicle class with specific safety or ADAS features, etc. Correlations can be derived from the vehicle data and one or both of claims data and frequency loss data (to the extent each are available). Such correlations can inform risk assessment, along with the telematics information for each trip by the driver.

The risk assessment engine 602 can access, from a hardware storage device, one or more telematics data records 604 structured to specify one or more telematics characteristics of a trip taken by a driver of a vehicle, wherein the telematics data records 604 are associated with a key that uniquely identifies the driver of the vehicle. The risk assessment engine 602 can also access, from the hardware storage device, vehicle data 606. Vehicle data 606 can include one or more vehicle symbol data records structured to specify one or more vehicle-specific characteristics for the vehicle. The one or more telematics data records 604 can be processed, e.g., by a hardware processor, to identify telematics data specifying the one or more telematics characteristics of the trip. The one or more vehicle symbol data records can be processed, for example, by a vehicle data selection processor, to identify vehicle symbol data specifying the one or more vehicle-specific characteristics for the vehicle. A risk assessment engine can generate a risk prediction for the driver based on the one or more telematics characteristics of the trip and the one or more vehicle-specific characteristics and store, in the hardware storage device, a risk data record that is structured with data specifying the risk prediction for the driver and that is associated with the key.

Risk assessment engine 602 can predict cost loss or frequency loss for the vehicle based on one or more of the inputs described above. In general, risk assessment engine 602 includes modules that function as a model-fitting problem. Given a set of risk features f1 .. fn, risk assessment engine 602 can predict for each driver (or vehicle) the number of crashes or loss cost of their crashes. In some implementations, the model-fitting can include a regression problem. That is, given a vector C of loss costs or crash counts for drivers, and a set of risk variables f1 ... fn, a set of weights W 1 ... Wn is determined, such that

$$W1 \circ f1 + W2 \circ f2 \ldots + Wn \circ fn \approx C.$$

Here the variables f can include raw vehicle data, VIN features, or selected vehicle data from, e.g., VIN embedding, as well as traditional telematics variables (e.g., harsh braking rate per mile of driving).

The risk assessment engine 602 can determine driver risk based, in part, on one or more telematics characteristics of the trip. The risk assessment engine 602 can receive as an input the telematics characteristics of the trip and determine driver risk based, at least in part, on the telematics characteristics of the trip. The risk assessment engine 602 or other module can assessing the driver risk determined from the telematics characteristics of the trip using the vehicle-specific characteristics. Put differently, telematics information that is used to predict driver risk can be interpreted using vehicle-specific information. This way, vehicle information is used to refine driver risk determined by the telematics information to accommodate for characteristics of the vehicle being driven.

For example, telematics information that shows hard braking can lead to different risk assessments for a driver of a large truck than for a driver of a small sedan. Using the vehicle information to interpret the telematics information for the trip can improve the accuracy of the risk assessment for the driver.

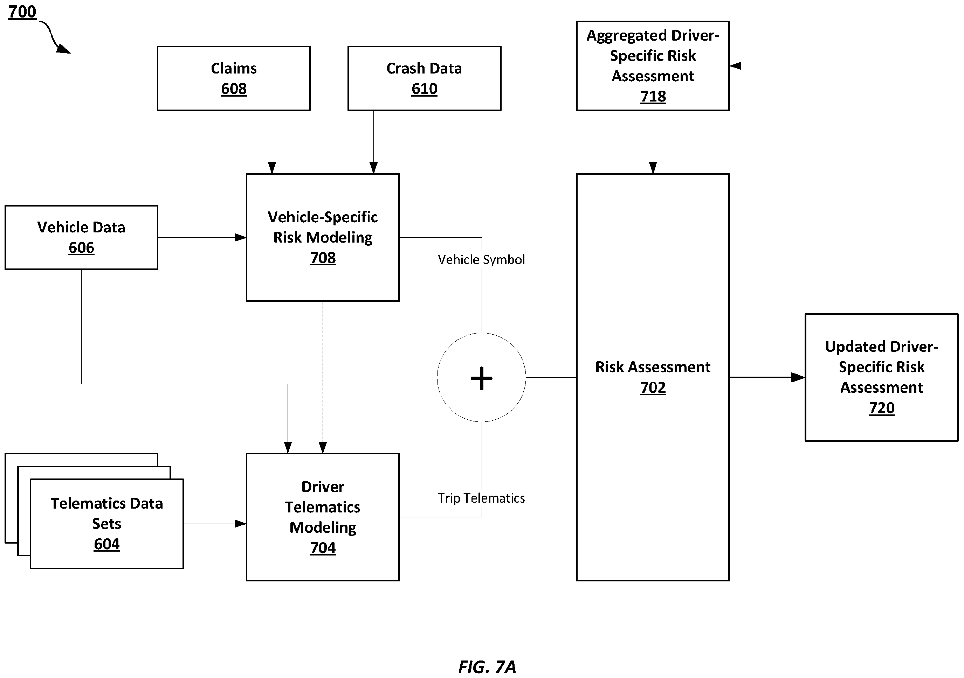

In on example, shown in FIGS. 7A-B, a neural network is used to determine weights. Other implementations are also within the scope of this disclosure.

FIG. 7A is a schematic diagram of a system 700 that includes a risk assessment engine 702 that uses vehicle symbol information with telematics information to assess risk in accordance with embodiments of the present disclosure. Risk assessment engine 702 can output a risk assessment, such as predicting cost loss and / or frequency loss, based on one or more inputs. The inputs can include vehicle symbols output from a vehicle-specific risk modeling 708 and driver behavior or score from telematics modeling 704. Vehicle data 606, including VIN-sourced vehicle information, is readily available but can be over-inclusive and contain information that is not useful or instructive for risk assessment purposes. Vehicle data 606 can be collected from various public and private databases and stored in a storage, such as storage 104. Vehicle data 606 can be retrieved from storage for training and for risk assessment purposes.

Crash data 610 can also be used as an input to the vehicle-specific risk modeling engine 708. The crash data 610 can also be used for training purposes. For example, crash data 610 can be used to train the vehicle-specific risk models as an input with the vehicle data 606. Claims data 608 can be used for testing outcomes from the trained vehicle-specific risk models 708.

In some embodiments, the vehicle symbol from vehicle-specific risk modeling 708 and the telematics modeling 704 can be combined. Rather than representing a vehicle's symbol as a single number, higher dimensional embedding can be used. Instead of representing a vehicle by a single number, for example, several numbers or a function or polynomial can be used to represent the vehicle symbol, providing a richer representation of the vehicle. Using several layers to the neural net instead of one, the risk assessment model should have sufficient capacity to provide joint telematics+VIN risk predictions.

In some embodiments, vehicle data 606 can be an input into telematics risk modeling 704. Telematics risk modeling 704 can use the vehicle data 606 to interpret raw telematics data 604 to provide an assessment of telematics-based risk that is modified or interpreted using the vehicle data 606. In this way, telematics information can have additional meaning with respect to driver behavior. In embodiments, the risk assessment engine 702 can also perform the interpretation of the telematics information 604 using vehicle data 606.

In one example, risk can be assessed specifically for ADAS features identified using VIN-sourced vehicle information without correlating the ADAS features to make/model of vehicles. (For instance, estimated factors like "forward collision systems reduce claims frequency by 10%"). In some embodiments, ADAS features likelihoods can be combined with vehicle symbols (vehicle-specific risk) to produce a combined risk. Using ADAS likelihoods to categorize vehicle buckets, the vehicle buckets can remain fairly large, since information across different makes and models can be combined. In some cases, however, ignoring vehicle make / model (or even vehicle class) can result in imprecise correlations between the presence of ADAS features and risk assessment. For example, a large pick-up truck and a small sedan may both share the same ADAS features, but may represent different risks. Adding vehicle-specific information to the risk models in addition to the ADAS features can increase computational complexity but can increase the accuracy of the risk models.

Although shown and described as being contained within server 102, which can be remote from mobile device 108, it is contemplated that any or all of the components of server 102 may instead be implemented within mobile device 108, and vice versa. It is further contemplated that any or all of the functionalities described herein may be performed during a drive, in real time, or after a drive.

Briefly, driver assessment or drive assessment can be an input into the risk assessment engine 702. The telematics data sets 604 can be accumulated from real-time telematics data from in-vehicle sensors, mobile devices, and other sources. The telematics data sets can be stored in storage 104 and retrieved by one or more processing engines, such as driver telematics modeling engine 704, for determining driver score or driver assessment. Driver score / assessment can be an input with the vehicle symbol to the risk assessment engine 702.

Risk assessment engine 702 can output an updated driver-specific risk assessment 720. The risk assessment engine 702 can also use aggregated driver-specific risk assessment information 718 from previous assessments to determine an updated driver risk assessment. The more historical data available for a driver, the more accurate the resulting risk assessment. So, historical driver behaviors and other information that was previously used in risk assessments can be factored into updating a current (or updated) driver-specific risk assessment 720. The updated driver-specific risk assessment 720 can then augment the aggregated driver-specific risk assessment 718 for future use.

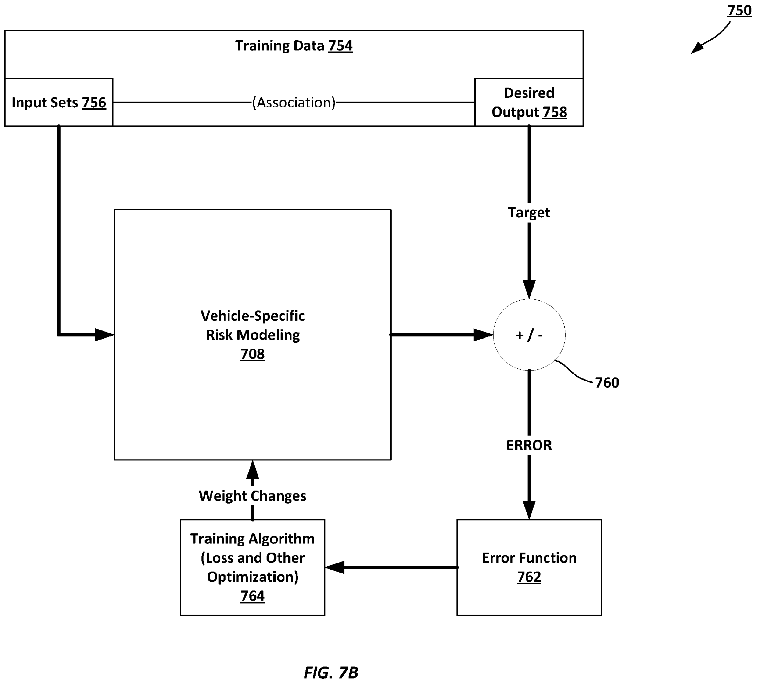

FIG. 7B is a schematic diagram of an example training system 750 for training vehicle-specific risk modeling in accordance with embodiments of the present disclosure. Training system 750 can be used to train the vehicle-specific risk assessment model 708. In the example shown in FIG. 7B, a neural net is used, but other machine learning algorithms can be used and are within the scope of this disclosure. The input sets 756 can include vehicle data such as VIN-sourced data, as described above. The input sets 756 can also include crash or collision data. The model 708 can output a vehicle symbol based on the inputs. Vehicle symbols are vehicle-specific risk assessments. The desired output 758 can use frequency loss or loss cost or other claims data for the vehicle, if available. The error function 762 can be used to affect the loss and other optimization for the training algorithm 764, which can change weights for the neural net. In addition, the error function can reveal whether the choice of how vehicles are categorized is an accurate and robust choice for predicting vehicle-specific risks. If errors are too large, then a different categorization method can be selected. An optimization can be identified by balancing the complexity of the categorization methodology, the cost associated with acquiring the underlying data sets, and the utility of the output, particularly in view of the error rates.

In one example, if VIN-sourced data is categorized using learned embedding using a neural net, then the training system can be used to optimize the embedding. The output of the neural net can be an embedding (of one or more dimensions) that classifies vehicle data. The desired output of the neural net can be the frequency loss, loss-cost, or other claims data that is organized based on the selected mechanisms for classifying the vehicle information. For example, instead of claims data for specific makes / models, which can be rare or difficult to find for all makes and models, claims data for vehicle years and class and engine size and ADAS features can be grouped together. Claim data for a larger bucket of vehicles can be easier to acquire. It may also be easier to categorize vehicles using broader categories based on similarities taken from VIN-sourced data.

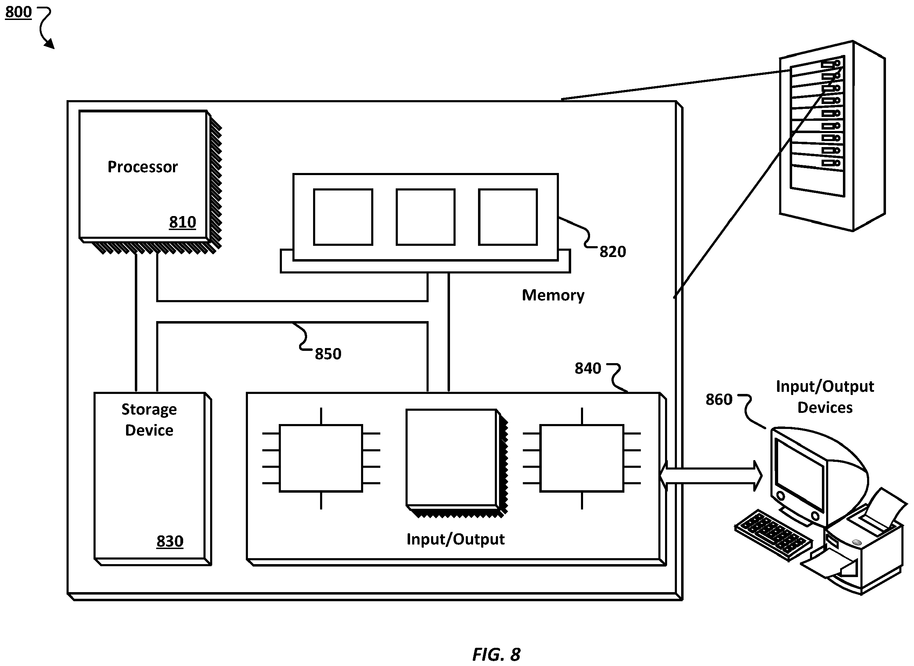

FIG. 8 is a block diagram of an example computer system 800. For example, referring to FIG. 1, the mobile device 108, tag device 112, and server 102 could be an example of the system 800 described here, as could a computer system used by any of the users who access resources of these components. The system 800 includes a processor 810, a memory 820, a storage device 830, and one or more input/output interface devices 840. Each of the components 810, 820, 830, and 840 can be interconnected, for example, using a system bus 850.

The processor 810 is capable of processing instructions for execution within the system 800. The term "execution" as used here refers to a technique in which program code causes a processor to carry out one or more processor instructions. In some implementations, the processor 810 is a single-threaded processor. In some implementations, the processor 810 is a multi-threaded processor. The processor 810 is capable of processing instructions stored in the memory 820 or on the storage device 830. The processor 810 may execute operations such as those described with reference to other figures described herein.

The memory 820 stores information within the system 800. In some implementations, the memory 820 is a computer-readable medium. In some implementations, the memory 820 is a volatile memory unit. In some implementations, the memory 820 is a nonvolatile memory unit.

The storage device 830 is capable of providing mass storage for the system 800. In some implementations, the storage device 830 is a non-transitory computer-readable medium. In various different implementations, the storage device 830 can include, for example, a hard disk device, an optical disk device, a solid-state drive, a flash drive, magnetic tape, or some other large capacity storage device. In some implementations, the storage device 830 may be a cloud storage device, e.g., a logical storage device including one or more physical storage devices distributed on a network and accessed using a network. In some examples, the storage device may store long-term data. The input/output interface devices 840 provide input/output operations for the system 800. In some implementations, the input/output interface devices 840 can include one or more of a network interface devices, e.g., an Ethernet interface, a serial communication device, e.g., an RS-232 interface, and/or a wireless interface device, e.g., an 802.11 interface, a 3G wireless modem, a 4G wireless modem, a 5G wireless modem, etc. A network interface device allows the system 800 to communicate, for example, transmit and receive data. In some implementations, the input/output device can include driver devices configured to receive input data and send output data to other input/output devices, e.g., keyboard, printer and display devices 860. In some implementations, mobile computing devices, mobile communication devices, and other devices can be used.

A server can be distributively implemented over a network, such as a server farm, or a set of widely distributed servers or can be implemented in a single virtual device that includes multiple distributed devices that operate in coordination with one another. For example, one of the devices can control the other devices, or the devices may operate under a set of coordinated rules or protocols, or the devices may be coordinated in another fashion. The coordinated operation of the multiple distributed devices presents the appearance of operating as a single device.

In some examples, the system 800 is contained within a single integrated circuit package. A system 800 of this kind, in which both a processor 810 and one or more other components are contained within a single integrated circuit package and/or fabricated as a single integrated circuit, is sometimes called a microcontroller. In some implementations, the integrated circuit package includes pins that correspond to input/output ports, e.g., that can be used to communicate signals to and from one or more of the input/output interface devices 840.

Although an example processing system has been described in FIG. 8, implementations of the subject matter and the functional operations described in this specification can be implemented in digital electronic circuitry, in tangibly embodied computer software or firmware, in computer hardware, including the structures disclosed in this specification and their structural equivalents, or in combinations of one or more of them. Software implementations of the described subject matter can be implemented as one or more computer programs. Each computer program can include one or more modules of computer program instructions encoded on a tangible, non-transitory, computer-readable computer-storage medium for execution by, or to control the operation of, data processing apparatus. Alternatively, or additionally, the program instructions can be encoded in/on an artificially generated propagated signal. In an example, the signal can be a machine-generated electrical, optical, or electromagnetic signal that is generated to encode information for transmission to suitable receiver apparatus for execution by a data processing apparatus. The computer-storage medium can be a machine-readable storage device, a machine-readable storage substrate, a random or serial access memory device, or a combination of computer-storage mediums.

The terms "data processing apparatus," "computer," and "computing device" (or equivalent as understood by one of ordinary skill in the art) refer to data processing hardware. For example, a data processing apparatus can encompass all kinds of apparatus, devices, and machines for processing data, including by way of example, a programmable processor, a computer, or multiple processors or computers. The apparatus can also include special purpose logic circuitry including, for example, a central processing unit (CPU), a field programmable gate array (FPGA), or an application specific integrated circuit (ASIC). In some implementations, the data processing apparatus or special purpose logic circuitry (or a combination of the data processing apparatus or special purpose logic circuitry) can be hardware- or software-based (or a combination of both hardware- and software-based). The apparatus can optionally include code that creates an execution environment for computer programs, for example, code that constitutes processor firmware, a protocol stack, a database management system, an operating system, or a combination of execution environments. The present disclosure contemplates the use of data processing apparatuses with or without conventional operating systems, for example LINUX, UNIX, WINDOWS, MAC OS, ANDROID, or IOS.

A computer program, which can also be referred to or described as a program, software, a software application, a module, a software module, a script, or code, can be written in any form of programming language. Programming languages can include, for example, compiled languages, interpreted languages, declarative languages, or procedural languages. Programs can be deployed in any form, including as standalone programs, modules, components, subroutines, or units for use in a computing environment. A computer program can, but need not, correspond to a file in a file system. A program can be stored in a portion of a file that holds other programs or data, for example, one or more scripts stored in a markup language document, in a single file dedicated to the program in question, or in multiple coordinated files storing one or more modules, sub programs, or portions of code. A computer program can be deployed for execution on one computer or on multiple computers that are located, for example, at one site or distributed across multiple sites that are interconnected by a communication network. While portions of the programs illustrated in the various figures may be shown as individual modules that implement the various features and functionality through various objects, methods, or processes, the programs can instead include a number of sub-modules, third-party services, components, and libraries. Conversely, the features and functionality of various components can be combined into single components as appropriate. Thresholds used to make computational determinations can be statically, dynamically, or both statically and dynamically determined.

The methods, processes, or logic flows described in this specification can be performed by one or more programmable computers executing one or more computer programs to perform functions by operating on input data and generating output. The methods, processes, or logic flows can also be performed by, and apparatus can also be implemented as, special purpose logic circuitry, for example, a CPU, an FPGA, or an ASIC.

Computers suitable for the execution of a computer program can be based on one or more of general and special purpose microprocessors and other kinds of CPUs. The elements of a computer are a CPU for performing or executing instructions and one or more memory devices for storing instructions and data. Generally, a CPU can receive instructions and data from (and write data to) a memory. A computer can also include, or be operatively coupled to, one or more mass storage devices for storing data. In some implementations, a computer can receive data from, and transfer data to, the mass storage devices including, for example, magnetic, magneto optical disks, or optical disks. Moreover, a computer can be embedded in another device, for example, a mobile telephone, a personal digital assistant (PDA), a mobile audio or video player, a game console, a GNSS sensor or receiver, or a portable storage device such as a universal serial bus (USB) flash drive.

Computer readable media (transitory or nontransitory, as appropriate) suitable for storing computer program instructions and data can include all forms of permanent/non-permanent and volatile/non-volatile memory, media, and memory devices. Computer readable media can include, for example, semiconductor memory devices such as random access memory (RAM), read only memory (ROM), phase change memory (PRAM), static random access memory (SRAM), dynamic random access memory (DRAM), erasable programmable read-only memory (EPROM), electrically erasable programmable read-only memory (EEPROM), and flash memory devices. Computer readable media can also include, for example, magnetic devices such as tape, cartridges, cassettes, and internal/removable disks. Computer readable media can also include magneto optical disks and optical memory devices and technologies including, for example, digital video disc (DVD), CD ROM, DVD+/-R, DVD-RAM, DVD-ROM, HD-DVD, and BLURAY. The memory can store various objects or data, including caches, classes, frameworks, applications, modules, backup data, jobs, web pages, web page templates, data structures, database tables, repositories, and dynamic information. Types of objects and data stored in memory can include parameters, variables, algorithms, instructions, rules, constraints, and references. Additionally, the memory can include logs, policies, security or access data, and reporting files. The processor and the memory can be supplemented by, or incorporated in, special purpose logic circuitry.

While this specification includes many specific implementation details, these should not be construed as limitations on the scope of what may be claimed, but rather as descriptions of features that may be specific to particular implementations. Certain features that are described in this specification in the context of separate implementations can also be implemented, in combination, in a single implementation. Conversely, various features that are described in the context of a single implementation can also be implemented in multiple implementations, separately, or in any suitable sub-combination. Moreover, although previously described features may be described as acting in certain combinations and even initially claimed as such, one or more features from a claimed combination can, in some cases, be excised from the combination, and the claimed combination may be directed to a sub-combination or variation of a sub-combination.

Particular implementations of the subject matter have been described. Other implementations, alterations, and permutations of the described implementations are within the scope of the following claims as will be apparent to those skilled in the art. While operations are depicted in the drawings or claims in a particular order, this should not be understood as requiring that such operations be performed in the particular order shown or in sequential order, or that all illustrated operations be performed (some operations may be considered optional), to achieve desirable results. In certain circumstances, multitasking or parallel processing (or a combination of multitasking and parallel processing) may be advantageous and performed as deemed appropriate.

Moreover, the separation or integration of various system modules and components in the previously described implementations should not be understood as requiring such separation or integration in all implementations, and it should be understood that the described program components and systems can generally be integrated together in a single software product or packaged into multiple software products.

Accordingly, the previously described example implementations do not define or constrain the present disclosure. Other changes, substitutions, and alterations are also possible without departing from the spirit and scope of the present disclosure.

## EMBODIMENTS:

1. A method performed by a data processing system, the method comprising:

accessing, from a hardware storage device, one or more telematics data records structured to specify one or more telematics characteristics of a trip taken by a driver of a vehicle, wherein the telematics data records are associated with a key that uniquely identifies the driver of the vehicle;
accessing, from the hardware storage device, one or more vehicle symbol data records structured to specify one or more vehicle-specific characteristics for the vehicle;
processing, by the data processing system, the one or more telematics data records to identify telematics data specifying the one or more telematics characteristics of the trip;
processing, by the data processing system, the one or more vehicle symbol data records to identify vehicle symbol data specifying the one or more vehicle-specific characteristics for the vehicle;
generating a risk prediction for the driver based on the one or more telematics characteristics of the trip and the one or more vehicle-specific characteristics; and
storing, in the hardware storage device, a risk data record that is structured with data specifying the risk prediction for the driver and that is associated with the key.

2. The method of embodiment 1, wherein the risk prediction characterizes a frequency loss.

3. The method of embodiment 1, wherein the risk prediction characterizes a loss cost.

4. The method of embodiment 1, wherein the prediction model comprises a prediction neural network.

5. The method of embodiment 1, wherein the vehicle symbol data comprise one or more of a Vehicle Identification Number ("VIN"), model year, vehicle make, vehicle model, vehicle type, engine size, brake size, safety features, and advanced driver assistance systems ("ADAS").

6. The method of embodiment 1, wherein the one or more telematics characteristics of the vehicle comprise one or more of vehicle location, geographical point of interest, vehicle speed, vehicle incidents, vehicle diagnostics, vehicle status, remote vehicle inspection reports, panic alerts, and images captured from a dashboard camera.

7. The method of embodiment 1, wherein processing, by the data processing system, the one or more vehicle symbol data records to identify vehicle symbol data specifying the one or more vehicle symbol characteristics of the vehicle comprises processing the parsed vehicle symbol data using a vehicle symbol embedding model to generate a vehicle symbol embedding.

8. The method of embodiment 1, wherein generating a risk prediction for the driver based on the one or more telematics characteristics of the trip and the one or more vehicle-specific characteristics comprises:

receiving the telematics characteristics of the trip and the vehicle-specific characteristics into a risk assessment engine;
determining, using the risk assessment engine, driver risk based, at least in part, on the telematics characteristics of the trip; and
assessing the driver risk determined from the telematics characteristics of the trip using the vehicle-specific characteristics.

9. One or more non-transitory computer-readable storage media for storing instructions, that when executed, cause a hardware processor to perform operations comprising:

accessing, from a hardware storage device, one or more telematics data records structured to specify one or more telematics characteristics of a trip taken by a driver of a vehicle, wherein the telematics data records are associated with a key that uniquely identifies the driver of the vehicle;

accessing, from the hardware storage device, one or more vehicle symbol data records structured to specify one or more vehicle-specific characteristics for the vehicle;

processing, by the data processing system, the one or more telematics data records to identify telematics data specifying the one or more telematics characteristics of the trip;

processing, by the data processing system, the one or more vehicle symbol data records to identify vehicle symbol data specifying the one or more vehicle-specific characteristics for the vehicle;

generating a risk prediction for the driver based on the one or more telematics characteristics of the trip and the one or more vehicle-specific characteristics; and

storing, in the hardware storage device, a risk data record that is structured with data specifying the risk prediction for the driver and that is associated with the key.

10. The one or more non-transitory computer-readable storage media for storing instructions of embodiment 9, wherein generating a risk prediction for the driver based on the one or more telematics characteristics of the trip and the one or more vehicle-specific characteristics comprises:

receiving the telematics characteristics of the trip and the vehicle-specific characteristics into a risk assessment engine;

determining, using the risk assessment engine, driver risk based, at least in part, on the telematics characteristics of the trip; and

assessing the driver risk determined from the telematics characteristics of the trip using the vehicle-specific characteristics.

11. The one or more non-transitory computer-readable storage media for storing instructions of embodiment 9, wherein the risk prediction characterizes a frequency loss.

12. The one or more non-transitory computer-readable storage media for storing instructions of embodiment 9, wherein the risk prediction characterizes a loss cost.

13. The one or more non-transitory computer-readable storage media for storing instructions of embodiment 9, wherein the prediction model comprises a prediction neural network.

14. The one or more non-transitory computer-readable storage media for storing instructions of embodiment 9, wherein the vehicle symbol data comprise one or more of a Vehicle Identification Number ("VIN"), model year, vehicle make, vehicle model, vehicle type, engine size, brake size, safety features, and advanced driver assistance systems ("ADAS").

15. The one or more non-transitory computer-readable storage media for storing instructions of embodiment 9, wherein the one or more telematics characteristics of the vehicle comprise one or more of vehicle location, geographical point of interest, vehicle speed, vehicle incidents, vehicle diagnostics, vehicle status, remote vehicle inspection reports, panic alerts, and images captured from a dashboard camera.

16. The one or more non-transitory computer-readable storage media for storing instructions of embodiment 9, wherein processing, by the data processing system, the one or more vehicle symbol data records to identify vehicle symbol data specifying the one or more vehicle symbol characteristics of the vehicle comprises processing the vehicle symbol data using a vehicle symbol embedding model to generate a vehicle symbol embedding.

17. A system comprising:

one or more processors; and
a non-transitory computer-readable medium storing instructions which, when executed by the one or more processors, configure the system to:

accessing, from a hardware storage device, one or more telematics data records structured to specify one or more telematics characteristics of a trip taken by a driver of a vehicle, wherein the telematics data records are associated with a key that uniquely identifies the driver of the vehicle;

accessing, from the hardware storage device, one or more vehicle symbol data records structured to specify one or more vehicle-specific characteristics for the vehicle;

processing, by the data processing system, the one or more telematics data records to identify telematics data specifying the one or more telematics characteristics of the trip;

processing, by the data processing system, the one or more vehicle symbol data records to identify vehicle symbol data specifying the one or more vehicle-specific characteristics for the vehicle;

generating a risk prediction for the driver based on the one or more telematics characteristics of the trip and the one or more vehicle-specific characteristics; and

storing, in the hardware storage device, a risk data record that is structured with data specifying the risk prediction for the driver and that is associated with the key.

18. The system of embodiment 17, wherein generating a risk prediction for the driver based on the one or more telematics characteristics of the trip and the one or more vehicle-specific characteristics comprises:

receiving the telematics characteristics of the trip and the vehicle-specific characteristics into a risk assessment engine;

determining, using the risk assessment engine, driver risk based, at least in part, on the telematics characteristics of the trip; and

assessing the driver risk determined from the telematics characteristics of the trip using the vehicle-specific characteristics.

19. The system of embodiment 17, wherein the risk prediction characterizes a frequency loss or a loss cost.

20. The system of embodiment 17, wherein the vehicle symbol data comprise one or more of a Vehicle Identification Number ("VIN"), model year, vehicle make, vehicle model, vehicle type, engine size, brake size, safety features, and advanced driver assistance systems ("ADAS").

**Claims**

1. A method performed by a data processing system, the method comprising:

accessing, from a hardware storage device, one or more telematics data records structured to specify one or more telematics characteristics of a trip taken by a driver of a vehicle, wherein the telematics data records are associated with a key that uniquely identifies the driver of the vehicle;

accessing, from the hardware storage device, one or more vehicle symbol data records structured to specify one or more vehicle-specific characteristics for the vehicle;

processing, by the data processing system, the one or more telematics data records to identify telematics data specifying the one or more telematics characteristics of the trip;

processing, by the data processing system, the one or more vehicle symbol data records to identify vehicle symbol data specifying the one or more vehicle-specific characteristics for the vehicle;

generating a risk prediction for the driver based on the one or more telematics characteristics of the trip and the one or more vehicle-specific characteristics; and

storing, in the hardware storage device, a risk data record that is structured with data specifying the risk prediction for the driver and that is associated with the key.

2. The method of claim 1, wherein the risk prediction characterizes a frequency loss or a loss cost.

3. The method of claim 1, wherein the prediction model comprises a prediction neural network.

4. The method of claim 1, wherein the vehicle symbol data comprise one or more of a Vehicle Identification Number ("VIN"), model year, vehicle make, vehicle model, vehicle type, engine size, brake size, safety features, and advanced driver assistance systems ("ADAS").

5. The method of claim 1, wherein the one or more telematics characteristics of the vehicle comprise one or more of vehicle location, geographical point of interest, vehicle speed, vehicle incidents, vehicle diagnostics, vehicle status, remote vehicle inspection reports, panic alerts, and images captured from a dashboard camera.

6. The method of claim 1, wherein processing, by the data processing system, the one or more vehicle symbol data records to identify vehicle symbol data specifying the one or more vehicle symbol characteristics of the vehicle comprises processing the parsed vehicle symbol data using a vehicle symbol embedding model to generate a vehicle symbol embedding.

7. The method of claim 1, wherein generating a risk prediction for the driver based on the one or more telematics characteristics of the trip and the one or more vehicle-specific characteristics comprises:

receiving the telematics characteristics of the trip and the vehicle-specific characteristics into a risk assessment engine;

determining, using the risk assessment engine, driver risk based, at least in part, on the telematics characteristics of the trip; and

assessing the driver risk determined from the telematics characteristics of the trip using the vehicle-specific characteristics.

8. One or more non-transitory computer-readable storage media for storing instructions, that when executed, cause a hardware processor to perform operations comprising:

accessing, from a hardware storage device, one or more telematics data records structured to specify one or more telematics characteristics of a trip taken by a driver of a vehicle, wherein the telematics data records are associated with a key that uniquely identifies the driver of the vehicle;

accessing, from the hardware storage device, one or more vehicle symbol data records structured to specify one or more vehicle-specific characteristics for the vehicle;

processing, by the data processing system, the one or more telematics data records to identify telematics data specifying the one or more telematics characteristics of the trip;

processing, by the data processing system, the one or more vehicle symbol data records to identify vehicle symbol data specifying the one or more vehicle-specific characteristics for the vehicle;

generating a risk prediction for the driver based on the one or more telematics characteristics of the trip and the one or more vehicle-specific characteristics; and

storing, in the hardware storage device, a risk data record that is structured with data specifying the risk prediction for the driver and that is associated with the key.

9. The one or more non-transitory computer-readable storage media for storing instructions of claim 8, wherein generating a risk prediction for the driver based on the one or more telematics characteristics of the trip and the one or more vehicle-specific characteristics comprises:

receiving the telematics characteristics of the trip and the vehicle-specific characteristics into a risk assessment engine;

determining, using the risk assessment engine, driver risk based, at least in part, on the telematics characteristics of the trip; and

assessing the driver risk determined from the telematics characteristics of the trip using the vehicle-specific characteristics.

10. The one or more non-transitory computer-readable storage media for storing instructions of claim 8, wherein the risk prediction characterizes a frequency loss or a loss cost.

11. The one or more non-transitory computer-readable storage media for storing instructions of claim 8, wherein the prediction model comprises a prediction neural network.

12. The one or more non-transitory computer-readable storage media for storing instructions of claim 8, wherein the vehicle symbol data comprise one or more of a Vehicle Identification Number ("VIN"), model year, vehicle make, vehicle model, vehicle type, engine size, brake size, safety features, and advanced driver assistance systems ("ADAS").

13. The one or more non-transitory computer-readable storage media for storing instructions of claim 8, wherein the one or more telematics characteristics of the vehicle comprise one or more of vehicle location, geographical point of interest, vehicle speed, vehicle incidents, vehicle diagnostics, vehicle status, remote vehicle inspection reports, panic alerts, and images captured from a dashboard camera.

14. The one or more non-transitory computer-readable storage media for storing instructions of claim 8, wherein processing, by the data processing system, the one or more vehicle symbol data records to identify vehicle symbol data specifying the one or more vehicle symbol characteristics of the vehicle comprises processing the vehicle symbol data using a vehicle symbol embedding model to generate a vehicle symbol embedding.

15. A system comprising:

one or more processors; and

a non-transitory computer-readable medium storing instructions which, when executed by the one or more processors, configure the system to perform the method of any one of claims 1 to 7.

100

122 — Telematics Application Instance

108

110

112

106 — Network

102 — Server

Processor
114

Risk Assessment Eng
116

Telematics Engine
118

Vehicle Symbol Engine
120

104 — Storage

*FIG. 1*

110

112

Vehicle Systems
200

Terrestrial TRX
202

Satellite TRX
204

Sensors
206

Processor
201

I/O
208

User Interface
210

Control System
212

Storage
214

*FIG. 2*

**Tag**
**112**

| Microcontroller 302 |
| --- |

300

- Accelerometer 304
- Gyroscope 306
- Light Sensor 308
- Pressure Sensor 310
- Magnetometer 312

| Battery 314 |
| --- |

| Comms Module 316 |
| --- |

| Tamper Detection 318 |
| --- |

| Storage 320 |
| --- |

*FIG. 3*

**Mobile Device**
**108**

Telematics 402

Notification Block 420

Sensor Data Block 404

Satellite Receiver 406

Accelerometer 408

Magnetometer 410

Gyroscope 412

Microphone 414

Compass 416

Barometer 418

Data Processing Block 422

Processor 424

Storage 426

Data Transmission Block
430

Wireless Transceiver
432

Cellular Transceiver
434

Direct Transmission
436

Tag
112

Comms Module
312

Sensor Suite
300

Server
102

Processor
114

Storage
104

*FIG. 4*

EP 4 312 177 A1

500

**Mobile Device**
**108**

| Telematics Instance |
| 402 |

| Accumulated Sensor Data |
| 440 |

| Communications |
| 430 |

Tag
112

**Server**
**102**

| Processor |
| 114 |

| Risk Assessment Engine |
| 116 |

| Telematics Engine |
| 118 |

| Vehicle Symbol Engine |
| 120 |

**Storage**
**104**

| Vehicle Data |
| 502 |

| Telematics Data |
| 504 |

| Driver Data |
| 506 |

| Risk Assessment |
| 508 |

| Frequency Data |
| 510 |

| Loss Data |
| 512 |

| ML Models |
| 514 |

*FIG. 5*

**600**

Aggregated Driver-Specific Risk Assessment
**612**

Crash Data
**610**

Claims Data
**608**

Vehicle Data
**606**

Telematics Data Sets
**604**

Risk Assessment
**602**

Updated Driver-Specific Risk Assessment
**624**

Vehicle data 606 can be raw vehicle data from VIN, raw vehicle data from VIN decoder, or selected vehicle data from embedding or other selection mechanism

*FIG. 6A*

FIG. 6B

**FIG. 7A**

**750**

```
Training Data 754
```

| Input Sets 756 | —————(Association)————— | Desired Output 758 |

**Target**

**Vehicle-Specific Risk Modeling 708**

**+ / -**

760

**ERROR**

**Weight Changes**

**Training Algorithm (Loss and Other Optimization) 764**

**Error Function 762**

*FIG. 7B*

**FIG. 8**

EP 4 312 177 A1

Europäisches
Patentamt

European
Patent Office

Office européen
des brevets

# EUROPEAN SEARCH REPORT

Application Number

EP 23 18 7837

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/188935 A1 (TINSKEY MICHAEL ROBERT [US] ET AL) 16 June 2022 (2022-06-16) * abstract; figures 1-5 * * paragraphs [0005] – [0054] * | 1-15 | INV. G06Q40/08 |
| X | US 2021/272207 A1 (FIELDS BRIAN MARK [US] ET AL) 2 September 2021 (2021-09-02) * abstract; figures 1-15 * * paragraphs [0196] – [0229] * | 1-15 | |
| X | US 2020/180644 A1 (WANG ZHI HU [CN] ET AL) 11 June 2020 (2020-06-11) * abstract; figures 1-7 * * paragraphs [0058] – [0086] * | 1-15 | |
| A | US 11 386 161 B1 (GUPTA NITIKA [IN] ET AL) 12 July 2022 (2022-07-12) * column 2, line 52 – column 3, line 10 * * column 4, lines 52-62 * | 6,14 | |
| | | | TECHNICAL FIELDS SEARCHED (IPC) G06Q B60W G07C |

The present search report has been drawn up for all claims

| Place of search | Date of completion of the search | Examiner |
|---|---|---|
| The Hague | 6 December 2023 | Berlea, Alexandru |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                      

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 18 7837

This annex lists the patent family members relating to the patent documents cited in the above-mentioned European search report.
The members are as contained in the European Patent Office EDP file on
The European Patent Office is in no way liable for these particulars which are merely given for the purpose of information.

06-12-2023

| Patent document cited in search report | | Publication date | Patent family member(s) | | Publication date |
|---|---|---|---|---|---|
| US 2022188935 | A1 | 16-06-2022 | DE 102021132573 | A1 | 15-06-2022 |
| | | | US 2022188935 | A1 | 16-06-2022 |
| US 2021272207 | A1 | 02-09-2021 | US 9805601 | B1 | 31-10-2017 |
| | | | US 9868394 | B1 | 16-01-2018 |
| | | | US 9870649 | B1 | 16-01-2018 |
| | | | US 10019901 | B1 | 10-07-2018 |
| | | | US 10026237 | B1 | 17-07-2018 |
| | | | US 10106083 | B1 | 23-10-2018 |
| | | | US 10163350 | B1 | 25-12-2018 |
| | | | US 10242513 | B1 | 26-03-2019 |
| | | | US 10325491 | B1 | 18-06-2019 |
| | | | US 10343605 | B1 | 09-07-2019 |
| | | | US 10748419 | B1 | 18-08-2020 |
| | | | US 10769954 | B1 | 08-09-2020 |
| | | | US 10950065 | B1 | 16-03-2021 |
| | | | US 10977945 | B1 | 13-04-2021 |
| | | | US 11107365 | B1 | 31-08-2021 |
| | | | US 11450206 | B1 | 20-09-2022 |
| | | | US 2021166323 | A1 | 03-06-2021 |
| | | | US 2021258486 | A1 | 19-08-2021 |
| | | | US 2021272207 | A1 | 02-09-2021 |
| | | | US 2022392342 | A1 | 08-12-2022 |
| US 2020180644 | A1 | 11-06-2020 | NONE | | |
| US 11386161 | B1 | 12-07-2022 | US 11386161 | B1 | 12-07-2022 |
| | | | US 2023080589 | A1 | 16-03-2023 |
| | | | WO 2023039048 | A1 | 16-03-2023 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 11074769 B
- US 52981214

- US 11072339 B